# EUROPÄISCHE PATENTANMELDUNG

(11) **EP 2 074 882 A2**
(43) Veröffentlichungstag der Anmeldung: **01.07.2009**
(21) Anmeldenummer: 08401007.3
(22) Anmeldetag: 16.10.2008
(51) Int. Cl.: A01K 1/12

(54) **Melkstand und dazugehöriges Arbeitsverfahren**

(30) Priorität: 19.10.2007 DE 102007000967
(71) Anmelder: Dücker, Hinrich, 27432 Volkmarst (DE); Waldmann, Marco, 29359 Eschede-Habighorst (DE)
(72) Erfinder: Dücker, Hinrich, 27432 Volkmarst (DE)
(74) Vertreter: Hansen, Jochen

(57) **Zusammenfassung**

Die Erfindung betrifft Melkstand (1) mit einem Boden (2), einem Vorwartebereich (V) zur Aufnahme von zu melkenden Tieren (MT), einem Nachwartebereich (N) zur Aufnahme von gemolkenen Tieren (GT) und einem Melkbereich (M) mit einer Standfläche (3), wobei der Melkbereich (M) von dem Vorwartebereich (V) und dem Nachwartebereich (N) umlaufend umschlossen ist und Treibevorrichtungen (4) innerhalb des Wartebereichs (VN) vorgesehen sind.

Weiter betrifft die Erfindung ein Arbeitsverfahren für einen derartigen Melkstand (1).

## Beschreibung

Die Erfindung betrifft einen Melkstand mit einem Boden, einem Vorwartebereich zur Aufnahme von zu melkenden Tieren, einem Nachwartebereich zur Aufnahme von gemolkenen Tieren und einem Melkbereich mit einer Standfläche, wobei der Melkbereich von dem Vorwartebereich und dem Nachwartebereich umlaufend umschlossen ist und Treibevorrichtungen innerhalb des Wartebereichs vorgesehen sind. Ferner betrifft die Erfindung ein Arbeitsverfahren für einen derartigen Melkstand.

Aus dem Stand der Technik sind Melkstände mit entsprechenden Arbeitsverfahren bereits lange bekannt. Melkstände sind Vorrichtungen und Anordnungen um zu melkende Tiere möglichst schnell, resourcenschonend und effizient zu melken. Häufig sind dabei zum bequemeren Zugriff des Melkers zum zu melkenden Tier sog. Melkgruben im Melkbereich vorgesehen. Die Melkstände können nach der Stellung der zu melkenden Tiere im Melkbereich unterteilt werden, wobei die zu melkenden Tiere bei der Parallel- oder auch side-by-side Melkanordnung nebeneinander und mit dem Kopf von der Melkergrube weg, bei der Tandem-Melkanordnung parallel zur Melkergrube, wobei der Melker das jeweilig zu melkende Tier seitlich bedient, und bei der Fischgräten-Melkanordnung schräg zur Melkergrube und mit dem Kopf von der Melkgrube weg stehen. Seltener verwendet werden Polygon- oder Trigonmelkstände, wobei die Anzahl der Melkplätze unterschiedlich ist und sich nach der Größe der Herde und der angestrebten Melkzeit richtet.

Ein Parallelmelkstand kann mit einem Schnellaustrieb bestückt sein, damit die Tiere den Melkstand nach dem Melken zügig verlassen, wobei ausreichend Platz eine zwingende Vorraussetzung ist, damit die Tiere nicht an Engstellen stehen bleiben, was ein Mehr an umbauten Raum und damit höhere Baukosten bedeutet.

Bei einem Tandemmelkstand betritt/verlässt ein einzelnes Tier den Melkstand im Gegensatz zu Gruppenmelkständen, wo eine Gruppe von Tieren den Melkstand gleichzeitig betritt/verlässt. Vorteilhaft ist bei dieser Melkanordnung, dass zu melkende Tiere, die länger gemolken werden müssen, ein Verlassen anderer bereits gemolkener Tiere nicht behindern.

Weiter gibt es Melkstände in Form eines Melkkarussells, beispielsweise bekannt unter den Bezeichnungen "AutoRotor" oder "Rotolaktor", wobei in diesen Melkständen das Tier eine rotierende Kreisscheibe betritt, auf der die Melkzeuge installiert sind, und während des Melkvorgangs die Kreisscheibe eine Drehung um 360° vollzieht, wodurch das zu melkende Tier nach dem Melken das Karussell, also die Kreisscheibe wieder an dem Punkt verlässt, an dem es das Karussell betreten hat. Hierbei ist allerdings ein gut gestalteter Warte-, Sammel-oder Vorraum oder -hof von Nöten, damit die Tiere möglichst ohne Treibhilfe zum Melkplatz kommen. Der Melker kann inner- oder außerhalb des Karussells arbeiten.

Die DE 10 2004 014 520 A1 offenbart eine Stallanordnung und eine Stallanlage für die Milchviehhaltung, wobei die Stallanordnung einen Melkbereich und einen Rundstall mit einem zentralen Bereich und einen im Wesentlichen darum angeordneten Aufenthaltsbereich aufweist. Der Melkbereich bei dieser Anordnung ist radial außerhalb des Aufenthaltsbereichs angeordnet. Weiterhin wird in dieser Schrift eine Treibeeinrichtung beschrieben, die das Treiben der zu melkenden Tiere aus dem zentralen inneren Bereich in den radialen äußeren Melkbereich vollzieht.

Durch die DE 26 50 741 A1 ist eine Karussell-Melkanordnung bekannt, die mehrere Melkplätze aufweist, die auf einer Plattform angeordnet sind. Hierbei handelt es sich um eine side-by-side Karussell-Melkanlage, wobei die Tiere radial einwärts durch ein Gitter zu den Melkplätzen geführt werden. Nach Betreten des jeweiligen Melkplatzes werden die zu melkenden Tiere jedoch noch um eine Trennanordnung der jeweilig in Drehrichtung benachbarten Melkplätze herumgeführt, damit sie danach rückwärtsgerichtet im Melkbereich stehen. Nach dem Betreten des zu melkenden Tiers wird die Plattform bis zum nächsten Melkplatz weiter gedreht, wo das nächste zu melkende Tier in den Melkplatz entsprechend obiger Schilderung eingeführt wird, um ebenfalls gemolken zu werden. Nach Beenden des jeweiligen Melkvorgangs werden die zu melkenden Tiere aus ihren Melkplätzen an der Ausgangsstelle gleich neben der Eingangsstelle wieder entlassen.

Die GB 1 459 399 A offenbart ebenfalls Karussell-Melkanordnungen, wobei sich die zu melkenden Tiere auf einer angetriebenen rotierenden Plattform befinden, hierbei sich jedoch in Fischgrät-Melkanordnung in Gruppen auf der Plattform positionieren. Ferner wird hier ein Umlaufen eines Gitters zwischen zwei Melkplätzen zum Ausgang hin beschrieben, wenn die zu melkenden Tiere in side-by-side Melkanordnung auf der rotierenden Plattform stehen. Hierbei wird die natürliche Vorwärtsbewegung der Tiere ausgenutzt, um die Anlage zu verlassen.

In der US 3,762,370 A wird ein Melkkarussell beschrieben, indem die zu melkenden Tiere in der Tandem-Melkanordnung innerhalb einer rotierenden Führungs- und Treibeanordnung auf einem festen Boden geführt gemolken werden. An der Stelle, an der die zu melkenden Tiere die Anlage betreten haben, verlassen diese die Anlage wieder, nachdem diese mindestens eine ganze Runde in dem Rondell geführt gegangen sind, wobei diese während des geführten Gehens gemolken werden.

Die DD 118 504 A1 offenbart einen Melkstand mit einer Einrichtung zur automatischen Gruppenbildung von Großvieh und zur Zuführung in den Melkstand zur ordnungsgemäßen Belegung der vorhandenen Standplätze. Hierbei ist ein Vorwartebereich und ein Nachwartebereich um den Melkstand herum angeordnet, so dass die zu melkenden Tiere auf der einen Seite von dem Vorwartebereich kommend in den Melkstand eintreten können und ihn auf der anderen Seite über den Nachwartebereich wieder verlassen können, wobei der Vor- und Nachwartebreich den Melkstand umlaufend umschließend ausgebildet ist. Ferner ist ein Treiber für einen reibungslosen Ablauf beschrieben.

Der vorliegenden Erfindung liegt die Aufgabe zugrunde, eine Weiterentwicklung eines Melkstands und eines Arbeitsverfahrens für den Betrieb eines Melkstands zu betreiben, wobei zum einen auf großflächige Anordnungen und zum anderen auf unnötige Wartezeiten für den/die Melker und die zu melkenden Tiere verzichtet wird.

Gelöst wird diese Aufgabe mit einem Melkstand nach Anspruch 1 und einem Arbeitsverfahren nach Anspruch 11.

Dadurch, dass der Melkbereich von dem Vorwartebereich und dem Nachwartebereich umlaufend umschlossen ist, können sowohl die zu melkenden Tiere von überall aus dem Vorwartebereich den Melkbereich betreten, als auch die gemolkenen Tiere aus dem Melkbereich und den entsprechenden Melkplätzen kommend in den Nachwartebereich übertreten. Ebenso können die zu melkenden Tiere zur Befüllung des Vorwartebereichs von beliebiger Stelle in den Vorwartebereich eingebracht werden, wobei hier ein zwei, drei oder auch mehrere Schleusen zum Einlass in den Vorwartebereich denkbar sind, zum Ausbringen von gemolkenen Tieren können die gemolkenen Tiere durch beispielsweise ein, zwei, drei oder mehrere Schleusen den Nachwartebereich nach außen verlassen, ohne das der Melkbereich durchquert werden muss. Wenn die Grundfläche des Vorwartebereichs und die Grundfläche des Nachwartebereichs des Melkstands variabel und relativ zueinander verstellbar sind, lässt sich so eine variable Anpassung an die Platzerfordernisse für wartende zu melkende Tiere und für wartende gemolkene Tiere betreiben. Um die genaue räumliche Trennung von Vorwartebereich und Nachwartebereich innerhalb des Wartebereichs zu vollziehen, sind Treibevorrichtungen innerhalb des Wartebereichs vorgesehen, die den Vor- und Nachwartebereich voneinander trennen.

Wenn das Arbeitsverfahren für einen Melkstand mit einem Wartebereich, bestehend aus einem Vorwartebereich und einem Nachwartebereich, und einem Melkbereich mit Melkplätzen die folgenden Schritte
- Einbringen der zu melkenden Tiere in den Vorwartebereich des leeren Melkstands, wobei die gesamte Grundfläche des Wartebereichs den Vorwartebereich bildet und der Nachwartebereich keine Grundfläche oder nur eine verhältnismäßig kleine Grundfläche von 0 bis 10% der gesamten Grundfläche des Wartebereichs einnimmt,
- Überleiten ein oder mehrerer zu melkenden Tiere aus dem Vorwartebereich an einen Einzel- oder Gruppen-Melkplatz in den Melkbereich, wobei sich während des oder nach dem Überleitungsvorgangs die Grundfläche des Vorwartebereichs reduziert und entsprechend der Grundflächenreduzierung des Vorwartebereichs die Grundfläche des Nachwartebereichs vergrößert,
- Abmelken des/der im Melkbereich befindlichen zu melkenden Tiere(s),
- Weiteres Überleiten von einzelnen oder mehreren zu melkenden Tieren aus dem Vorwartebereich in leere Melkplätze im Melkbereich, solange bis alle Melkplätze im Melkbereich befüllt sind, wobei die Grundfläche des Vorwartebereichs fortlaufend oder abschnittsweise reduziert und damit einhergehend der Nachwartebereich entsprechend der Grundflächenreduzierung des Vorwartebereichs vergrößert wird,
- Überleiten gemolkener Tiere aus dem Melkbereich in den Nachwartebereich, Sammeln der gemolkenen Tiere im Nachwartebereich und bedarfsweises Wiederbefüllen von freigewordenen Melkplätzen mit zu melkenden Tieren aus dem Vorwartebereich und anschließendem Melken, bis sich keine zu melkenden Tiere im Vorwartebereich befinden,
- Sammeln gemolkener Tiere im Nachwartebereich und Ausbringen aus dem Nachwartebereich des Melkstandes umfasst, dann ist ein kontinuierliches Arbeiten des Melkers oder mehrerer Melker ohne große Wartezeiten zum Befüllen von leeren Melkplätzen oder Wartezeiten auf das Freiwerden von Melkplätzen durch fertig gemolkene Tiere gewährleistet.

Dadurch, dass die Grundfläche des Vorwartebereichs und die Grundfläche des Nachwartebereichs des Melkstands auf einer gemeinsamen Grundfläche des Wartebereichs angeordnet sind, wird die benötigte Baugrundfläche für den Melkstand auf ein Minimum reduziert, da die gemeinsame Grundfläche des Wartebereichs sowohl von dem Vorwartebereich als auch von dem Nachwartebereich entsprechend deren Füllständen mit zu melkenden bzw. gemolkenen Tiere relativ zueinander verstellbar benutzt wird.

Wenn die Summe der Grundflächen des Vorwartebereichs und des Nachwartebereichs konstant bleibt, lässt sich eine genaue Aufteilung der Grundfläche des Wartebereichs in Vor- und Nachwartebereich vollziehen, wobei sich der Vorwartebereich an dem Nachwartebereich und entsprechend der Nachwartebereich an dem Vorwartebereich orientiert.

Dadurch, dass zwei um den Melkbereich umlaufend verstellbare Treibevorrichtungen vorgesehen sind, die vorzugsweise sich durchlaufend ausgebildet sind, können diese den Vorwartebereich und den Nachwartebereich bedarfsgerecht voneinander trennen. Nach einem vollständigen Abfertigen einer Kuhgruppe, entsprechend der maximalen Grundfläche des Wartebereichs, beispielsweise 100 Tieren, passen diese 100 Tiere auf die Grundfläche des Wartebereichs, der dann vollständig Nachwartebereich ist. Die beiden Gitter der Treibevorrichtungen müssen sich hiernach nicht zeitaufwendig in ihre ursprüngliche Ausgangsstellung zurückbewegen, um ihre Anfangsstellung als Vorwartebereich zum Befüllen des Wartebereichs mit der nächsten Kuhgruppe mit zu melkenden Tieren einzunehmen, vielmehr können sie sich einfach durchlaufen. Durchlaufen bedeutet dabei, dass sich deren Treibeflächen in Treiberichtung flächenmäßig nicht überdecken und somit ohne gegenseitige Berührung aneinander vorbeilaufen können. Hierzu können die Treibevorrichtungen an einem Schienensystem, welches zur Vermeidung von Verschmutzung vorzugsweise oberhalb der zu melkenden Tiere angeordnet ist, herabhängend und vorzugsweise 30 bis 50 cm vom Boden zur Vermeidung von Verletzungen an den Tierextremitäten beabstandet, beispielsweise aus einem Gitter oder einem Kunststoffvorhang, bestehen. Die Treibevorrichtungen und das Schienensystem mit entsprechenden Motoren können sowohl manuell durch einen Melker bedient werden als auch komplett elektronisch gesteuert sein, was wiederum den Vorteil bietet, dass der Melker sich auf seine Aufgabe des Melkens konzentrieren kann. Bei einer elektronischen Steuerung überwachen Sensoren den Füllstand und die Belegungsdichte im Vor- und Nachwartebereich und steuern entsprechend die Treibevorrichtungen, um eine ruhige Zuführung der zu melkenden Tiere zum Melkbereich zu erreichen.

Wenn im Melkbereich Melkplätze zur Aufnahme von zu melkenden Tieren vorhanden sind, die gleichbeabstandet oder in Gruppen, vorzugsweise von 4 bis 8 Melkplätzen je Gruppe, um eine im Melkbereich vorgesehene Melkerarbeitsfläche für einen oder mehrere Melker, vorzugsweise eine Melkergrube, angeordnet sind, wobei bei Anordnung in n gleichbeabstandeten Einzel-Melkplätzen vorzugsweise eine runde Form zur Anordnung der Einzel-Melkplätze innerhalb des Melkbereichs um eine Arbeitsfläche vorgesehen ist und bei Anordnung der Melkplätze in n Gruppen, die Gruppen in Form eines n-Ecks, vorzugsweise 3, 4 oder 5 Gruppen, entsprechend in Drei-, Vier- oder Fünfeckform vorgesehen sind, kann die Fläche effizient ausgenutzt werden. Die Arbeitsfläche des Melkers kann hierbei vorzugsweise die gleiche Form haben, wie die Anordnung der Melkplätze im Melkbereich um die im Zentrum liegende Melkerarbeitsfläche. Die Melker können bevorzugt ihren Arbeitsbereich entweder durch eine Über- oder eine Unterführung betreten, wahlweise auch durch den Wartebereich direkt. Bei Nutzung der Über- oder Unterführung ist der Melker jederzeit in der Lage bei auftretenden Problemen im Außenbereich sofort den Melkbereich nach Außen zu verlassen, um dort eingreifend tätig zu werden.

Die Melkgrube kann als eine Vertiefung im Melkstand ausgebildet sein, in der der Melker steht. Hierbei braucht sich die melkende Person nicht bücken, um an das Euter der zu melkenden Tiere zu gelangen. Die Melkgrube ist etwa 50 bis 140 cm, vorzugsweise ca. 100 cm tiefer als die Standfläche der Tiere, wodurch das Melken weniger anstrengend wird. Die Melkgrube kann dabei mit einem höhenverstellbaren Boden versehen sein, um die Tiefe der Melkgrube an die Körpergröße der Melker anzupassen.

Wenn im Melkbereich Melkzeuge vorgesehen sind, ist ein maschinenunterstütztes Abmelken der zu melkenden Tiere möglich. Die Melkzeuge bestehen aus Melkmaschinenvorrichtungen, um bei verschiedenen landwirtschaftlich genutzten Muttertieren, insbesondere Kühen, die Milch aus dem Euter abzuziehen. Diese Vorrichtung kann die folgende Bestandteile umfassen, nämlich zwei bis vier Melkbecher, je nach Tierart, einem Milchsammelstück, kurze und lange Milchschläuche, kurze und lange Luftschläuche, einem Pulsator, einer Milchleitung, einem Milchabscheider, einem Milchsammeltank, einer Kühleinrichtung zur Kühlung der abgepumpten Milch und einer Vakuumpumpe , beispielsweise einer Verdränger- oder Wasserstrahlpumpe. Die Melkbecher werden durch den Melker, der in der Melkergrube steht, über die Zitzen des Euters gestülpt, und mittels eines Unterdrucks wird die Milch mittels der Melkbecher abgepumpt. Alternativ kann das Ansetzen und wieder Abnehmen der Melkbecher maschinell erfolgen, beispielsweise durch eine Anordnung am Boden, wobei diese Anordnung fest montiert und ausgerichtet angeordnet sein kann. Ferner kann hierbei ein computergestütztes System zur Kontrolle und Steuerung vorgesehen sein. Die abgemolkene Milch fließt aus den Melkbechern über die Milchschläuche in einen Milchabscheider, indem das Vakuum abgebaut wird und die Milch in den Milchkühltank gepumpt wird. Hierbei ist besonders vorteilhaft an der Gesamtanordnung, dass es keine Drehpunkte innerhalb des Milchförderstrangs gibt, die Wartungs- oder Fehleranfällig sind, wie beispielsweise ein Drehgelenk bei einem Milchkarussell. In dem Milchkühltank wird die Milch dann gekühlt und bis zur Verwendung gelagert.

Dadurch dass die einzelnen Melkplätze durch Trennvorrichtungen voneinander getrennt sind, kommt es innerhalb des Melkbereichs nicht zu Schiebereien und Gedrängel unter den Kühen, da diese sich nur in ihrem für den Melkvorgang vorgesehenen Bereich, dem Melkplatz, welcher durch die Trennvorrichtungen begrenzt wird, aufhalten können. Die Kühe sind in diesem Fall ruhiger und erfahren eine geringere Belastung während des Melkvorgangs.

Um den Melkstand vor Witterungseinflüßen zu schützen und um eine Abgrenzung nach Außen zu erhalten, ist der Melkstand von einer Einfriedung, vorzugsweise einer Gebäudeaußenwand, umschlossen, wobei die Einfriedung kreisrund, oval oder mehreckig, insbesondere rechteckig oder quadratisch, jeweils mit spitzen oder abgerundeteten Außenecken ausgebildet ist, wobei die Form der Abgrenzung nach Außen der inneren Anordnung der Melkplätze um die Melkergrube folgen kann.

Dadurch, dass der Vorwartebereich und der Nachwartebereich auf seinen Außenseiten von der Einfriedung des Melkstands begrenzt ist und auf seinen Innenseiten durch eine Begrenzung, insbesondere einem Gitter, einer Wand oder einem Vorhang vom Melkbereich getrennt ist, wird so ein abgeschlossener schützender Bereich für den Aufenthalt der zu melkenden und gemolkenen Tiere geschaffen, in dem diese sich vor und nach dem Melkvorgang aufhalten können.

Wenn der umlaufende Wartebereich eine zur Einfriedung parallele Begrenzung auf der Innenseite aufweist, können die Treibevorrichtungen mit gleichbleibender Breite konstruiert werden, da der Abstand zwischen der Einfriedung und der Begrenzung konstant bleibt. Alternativ müssten ansonsten Treibeinrichtungen verwendet werden, die in der Breite variabel ausgestaltet sind.

Um die Tiere vom Wartebereich in den Melkbereich und umgekehrt zu überführen, ist ein Ein- und Auslass in der Begrenzung auf der Innenseite des Wartebereichs vorgesehen.

Wenn die Begrenzung auf der Innenseite des Wartebereichs um einen zentralen Melkbereich drehbar ausgebildet ist, kann so ein dort vorgesehener Ein- und Auslass an die entsprechende Position bewegt werden, um an dieser Position Tiere von einem in den anderen Bereich, entweder von dem Wartebereich durch den Einlass in den Melkbereich oder aus dem Melkbereich durch den Auslass in den Wartebereich, zu überführen. Die Begrenzung ist hierbei um einen zentralen Punkt bei runder Ausgestaltung drehbar. Weiter ist bei einer eckigen Ausgestaltung der Grundfläche des Melkbereichs und des darum angeordneten Wartebereichs auch ein eckiger Grundriss der Abtrennung sinnvoll. Hierbei kann die Abtrennung, im Gegensatz zu einer runden und drehbaren Ausgestaltungsform, als schiebbare Abtrennung, beispielsweise ein rundumlaufender deckenhängender Vorhang, ausgestaltet sein, die an einem Schienensystem entsprechend des Grundrisses der Außenbegrenzung des Melkbereichs innerhalb des Melkstands angeordnet ist.

Wenn die zu melkenden Tiere nach dem Überleiten aus dem Vorwartebereich im Melkbereich ausgerichtet werden, ist es für den Melker einfacher, die Melkzeuge anzulegen. Hierbei ist vor Allem die Zeitersparnis zu nennen, die der Melker hat, da er nicht die Melkergrubeverlassen muss, um die Melkzeuge bei einem nicht entsprechend ausgerichteten zu melkenden Tier anzulegen. Das Ausrichten kann beispielsweise durch ein Umlaufen der Abtrennung zweier Melkplätze, welche auf der Seite zur Melkergrube hin einen Freiraum für das umlaufende zu melkende Tier aufweist, vollzogen werden, so dass das zu melkende Tier nach dem Umlaufen der Abtrennung zur Melkergrube rückwärtsgerichtet in dem zum zuerst betretenen Melkplatz benachbarten Melkplatz steht.

Dadurch, dass gemolkene Tiere aus dem Nachwartebereich bereits ausgebracht werden, wenn sich noch zu melkende Tiere oder bereits gemolkene Tiere im Melkbereich und/oder Vorwartebereich befinden, kann so die Anzahl der Tiere innerhalb der Anlage reduziert werden. Die bereits fertigen Tieren brauchen sich nicht weiter innerhalb des Melkstands aufzuhalten und können in ihre Stallungen oder auf ihre Weiden zurückkehren. Hierdurch wird Platz im Wartebereich frei.

Wenn nach einem Zwischenausbringen der gemolkenen Tiere aus dem Nachwartebereich die Grundfläche des Nachwartebereichs verkleinert und entsprechend die Grundfläche des Vorwartebereichs vergrößert wird und weitere zu melkende Tiere in den Vorwartebereich eingebracht werden, wird ein kontinuierliches Verfahren geschaffen, bei dem es keine Leerlaufzeiten und auch keinen Leerstand innerhalb des Melkstands gibt. Wartezeiten für das melkende Personal werden so auf ein Minimum reduziert.

Um ein für den Melker einfaches und überschaubares, wie auch kontrollierbares Verfahren anzuwenden, bewegen sich die zu melkenden Tiere und/oder die gemolkenen Tiere vor bzw. nach dem Abmelken fortlaufend im Wartebereich des Melkstands in die selbe Richtung. Hierdurch werden die Treibeinrichtungen und deren Ausgestaltungen sinnvoll ausgenutzt und es wird ein kontinuierliche Weiterbewegung der gesamten Anordnung gesichert, was letztendlich zu einem reibungslosen und kontinuierlichen Prozess führt.

Der Boden des Melkstands kann als Spaltenboden ausgebildet sein, wodurch die Reinigung des Melkstands effizient und kostengünstig durchgeführt werden kann. Hinzu kommt noch, dass es innerhalb des Melkstands keine sich drehenden Böden gibt, in deren Lagerung oder Antriebe Verunreinigungen durch die Tiere gelangen könnten.

Nachfolgend wird ein Ausführungsbeispiel der Erfindung anhand der beiliegenden Zeichnungen beschrieben.

### Darin zeigen:

- Fig. 1 bis 14: eine erste Ausführungsform eines Melkstands in verschiedenen Verfahrenszuständen in Draufsicht, wobei die einzelnen Figuren wie folgend beschriebene Verfahrenszustände darstellen:
- Fig. 1: Ausgangszustand mit wartenden zu melkenden Tieren,
- Fig. 2: zu melkende Tiere betreten den Vorwartebereich,
- Fig. 3: Vorwartebereich mit zu melkenden Tieren gefüllt,
- Fig. 4: erstes zu melkendes Tier betritt den Melkbereich,

- Fig. 5: erstes zu melkendes Tier befindet sich an seinem Melkplatz,
- Fig. 6: Treibevorrichtung wurde um einen Melkplatz weiter gegen den Uhrzeigersinn gedreht,
- Fig. 7: zweites zu melkendes Tier betritt den Melkbereich,
- Fig. 8: Treibevorrichtung wurde um einen Melkplatz weiter gegen den Uhrzeigersinn gedreht und drittes zu melkendes Tier betritt den Melkbereich,
- Fig. 9: ertes gemolkenes Tier verlässt den Melkbereich und leere Melkplätze werden weiterhin mit zu melkenden Tieren befüllt,
- Fig. 10: zwei gemolkene Tiere befinden sich im Nachwartebereich, weitere leere Plätze im Melkbereich werden mit zu melkenden Tieren wieder gefüllt,
- Fig. 11: Weiterdrehen der Treibevorrichtung und gleichzeitiges Verringern der Fläche des Vorwartebereichs und weiteres Befüllen des Nachwartebereichs mit gemolkenen Tieren aus dem Melkbereich und weiteres Füllen des Melkbereichs mit zu melkenden Tieren,
- Fig. 12: letztes zu melkendes Tier betritt den Melkbereich, weitere gemolkene Tiere verlassen den Melkbereich in den Nachwarte-bereich, der Vorwartebereich ist auf ein Minimum reduziert und der Nachwartebereich nimmt ein Maximum der Wartebereichsfläche ein,
- Fig. 13: erste gemolkene Tiere verlassen den Nachwartebereich,
- Fig. 14: letztes gemolkenes Tier verlässt den Melkbereich;

- Fig. 15: eine dreidimensionale Darstellung des ersten Ausführungsbeispiels des Melkstands entsprechend den Figuren 1 bis 14,
- Fig. 16: eine dreidimensionale Darstellung eines zweiten Ausführungsbeispiels eines Melkstands,
- Fig. 17: das in Fig. 16 dargestellte Ausführungsbeispiel eines Melkstands in Draufsicht und
- Fig. 18: eine dreidimensionale Darstellung eines dritten Ausführungsbeispiels eines Melkstands.

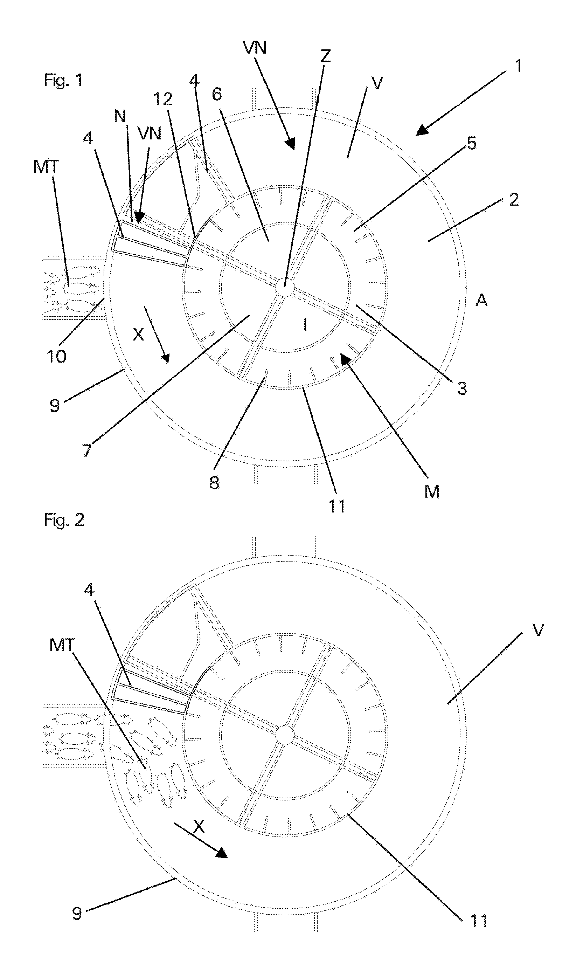

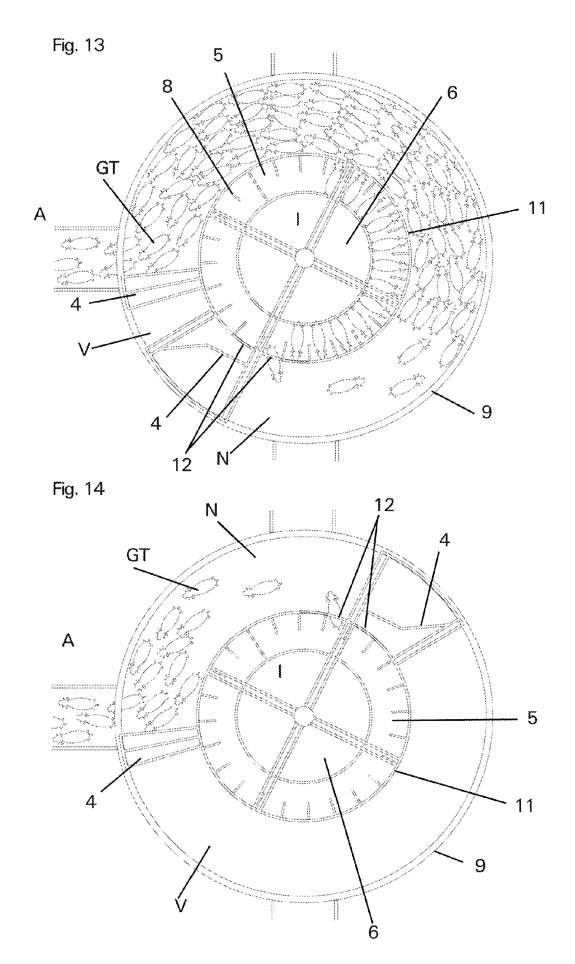

Die Fig. 1 bis 14 zeigen eine erste Ausführungsform eines Melkstands 1 in Draufsicht in verschiedenen Verfahrenszuständen. Hierbei wird ein chronologischer Ablauf eines gesamten Zykluses vom Einbringen der zu melkenden Tiere MT übers Melken bis zum Ausbringen der gemolkenen Tiere GT, beginnend mit Fig. 1 bis hin zu Fig. 14, dargestellt. Nachfolgend wird die gesamte Anordnung beschrieben. Im Anschluss an diese Beschreibung der Anordnung wird das hier dargestellte Verfahren näher erläutert.

Fig. 1 zeigt den Ausgangszustand mit wartenden zu melkenden Tieren MT, die sich noch außerhalb des Melkstands 1 befinden. Der Melkstand 1 weist eine Außenseite A und eine Innenseite I auf. Auf der Außenseite A ist eine Einfriedung 9 vorgesehen. Diese Einfriedung 9 dient gleichzeitig als Abgrenzung des Melkstands 1 nach außen und weiter noch als Schutz vor Witterungseinflüssen, wie beispielsweise Wind und sonstigen Umwelteinflüssen. In der Einfriedung ist mindestens ein Durchgang 10 für die zu melkenden Tiere MT vorgesehen, damit diese den Melkstand 1 betreten können. Weiterhin ist ein anderer Durchgang, hier nicht weiter dargestellt, für das Personal vorgesehen, damit dieses den Melkstand 1 auch während des Verfahrens betreten und/oder verlassen kann, ohne den Durchgang 10 zu öffnen und somit Gefahr zu laufen, dass Tiere den Melkstand ungewollt verlassen.

Innerhalb des Melkstands 1 ist ein Boden 2 vorgesehen, auf dem die zu melkenden Tiere MT sich bewegen oder stehen. Dieser Boden 2 kann beispielweise aus einem Spaltenboden gebildet werden, um den Anforderungen an Sauberkeit innerhalb des Melkstands 1 nachzukommen.

Innerhalb des Melkstands gibt es zwei grundsätzlich zu unterscheidende Bereiche, nämlich den Wartebereich VN und den Melkbereich M. Der Melkbereich M befindet sich auf der Innenseite I des Melkstands in einem zentralen Bereich im Mittelpunkt des Melkstands 1 und wird von einer Begrenzung 11 zur Außenseite hin begrenzt. Der Wartebereich VN befindet sich zwischen der Begrenzung 11 des Melkbereichs M und der Einfriedung 9 des Melkstands 1 und ist somit um den Melkbereich herum angeordnet. Der Wartebereich besteht aus einem Vorwartebereich V und einem Nachwartebereich N. Der Vorwartebereich V dient zur Aufnahme von zu melkenden Tieren MT und der Nachwartebereich dient zur Aufnahme von gemolkenen Tieren. In der Ausgangssituation, wie in Fig. 1 dargestellt, nimmt der Vorwartebereich V den maximalen Teil der Fläche des Wartebereichs VN ein und der Nachwartebereich N beschränkt sich hier auf einen minimalen Flächenanteil an der Fläche des Wartebereichs VN.

Innerhalb des Wartebereichs VN, der in Vorwartebereich V und Nachwartebereich N aufgeteilt ist, sind Treibevorrichtungen 4 vorgesehen, die zum einen die Trennung von Vorwartebereich V und Nachwartebereich N innerhalb des Wartebereichs VN übernehmen und zum anderen zum Treiben und Leiten bzw. Führen der Tiere innerhalb des jeweiligen Bereichs dienen. Diese Treibevorrichtungen 4 können sich selbst durchlaufend ausgebildet sein, um ein zeitaufwendiges Zurückstellen in deren jeweilige Ausgangsposition zu vermeiden. Die dargestellten zwei Treibevorrichtungen 4 befinden sich, wie in Fig. 1 dargestellt, in deren Ausgangsposition und bewegen sich innerhalb des Wartebereichs in Richtung X um den Melkbereich M herum. Die Treibevorrichtungen 4 werden hierbei einzeln verstellt, wobei sowohl nur eine Treibevorrichtung einzeln als auch beide gleichzeitig, hierbei aber auch mit unterschiedlichen Geschwindigkeiten und zurückzulegenden Wegen, bewegt werden können.

Innerhalb der Begrenzung 11 des Wartebereichs VN und des Melkbereichs M ist ein Ein-und Auslass 12 vorgesehen. Dieser dient zum Betreten der zu melkenden Tiere MT in den Melkbereich M und zum Verlassen der gemolkenene Tiere GT aus dem Melkbereich M hinüber in den Wartebereich VN. Dieser Ein-und Auslass 12 besteht aus zwei voneinander unabhängig ansteuerbaren Torbereichen, die je nach Anforderung einzeln oder gemeinsam geöffnet oder geschlossen werden können, um Tiere von einem Bereich in den anderen Bereich zu überführen.

Die Begrenzung 11 zwischen dem Melkbereich M und dem Wartebereich VN ist in diesem Ausführungsbeispiel als Vorhang ausgebildet. Dieser aus einem flexiblen, aber relativ dicken flächigen Kunststoff bestehende Vorhang ist hängend angeordnet und um einen zentralen Punkt Z, im dargestellten Ausführungsbeispiel dem geometrischen Mittelpunkt, im Melkstand 1 drehbar ausgestaltet. Hierbei wird der Ein- und Auslass 12 ebenfalls mitbewegt, wobei der Melkbereich M von jeder beliebigen Stelle des Wartebereichs VN erreicht werden kann und entsprechend kann aus jedem Bereich des Melkbereichs M der Wartebereich VN erreicht werden.

Der Melkbereich M, welcher im zentralen Bereich des Melkstands 1 angeordnet ist, gliedert sich in zwei wesentliche Abschnitte, nämlich die Standfläche 3 und die Arbeitsfläche 6. Die Standfläche 3 dient zur Aufnahme der Tiere, die gemolken werden sollen oder gerade gemolken werden, bzw. gerade gemolken wurden. Die Standfläche 3 ist in einzelne Melkplätze 5 aufgeteilt, die zum zentralen Punkt Z strahlenförmig angeordnet sind. Diese Melkplätze 5 dienen zur Aufnahme, zur Ausrichtung und zur Positionierung der Tiere auf der Standfläche 3 innerhalb des Melkbereichs M. Zur Abtrennung der einzelnen Melkplätze 5 sind Trennvorrichtungen 8 vorgesehen. Diese Trennvorrichtungen 8 sind in deren Ausgestaltung auf die Anforderungen an die Tiere angepasst. Zum einen ist deren Aufgabe, wie bereits erwähnt, die Abtrennung der einzelnen Melkplätze 5 zueinander, und zum anderen dienen die Trennvorrichtungen 8 zum Ausrichten der Milchtiere innerhalb des Melkbereichs M. Im Zentrum des Melkbereichs M liegt die Arbeitsfläche 6, die als Melkergrube 7 ausgestaltet ist. Diese Melkergrube 7 ist in Bezug auf die Standfläche 3 und den Boden 2, welche zueinander auf der gleichen Höhe liegen, nach unten herabgesetzt, so dass ein Melker ganz bequem im Stehen an den Tieren, welche sich in ihren Melkplätzen 5 befinden, arbeiten kann, um beispielsweise das Melkzeug an den Tieren anzulegen oder dieses wieder abzunehmen.

Der verfahrensgemäße Ablauf lässt sich wie folgt anhand der Fig. 1 bis 14 erkennen. Fig. 1 stellt die Ausgangsanordnung des Melkstands 1 dar. Die zu melkenden Tiere MT warten vor dem Melkstand 1, um nach Freigabe des Durchgangs 10 in den Melkstand 1 einzutreten. Der gesamte Wartebereich VN ist durch die Position der Treibevorrichtungen 4 als Vorwartebereich V ausgebildet. Dieser Vorwartebereich ist in Fig. 1 noch leer.

In Fig. 2 betreten die zu melkenden Tiere MT den Melkstand 1 durch den Durchgang 10 in der Einfriedung 9 des Melkstands 1. Sie kommen direkt in den freien Vorwartebereich V, wo sie sich in Richtung X fortbewegen und den Vorwartebereich füllen.

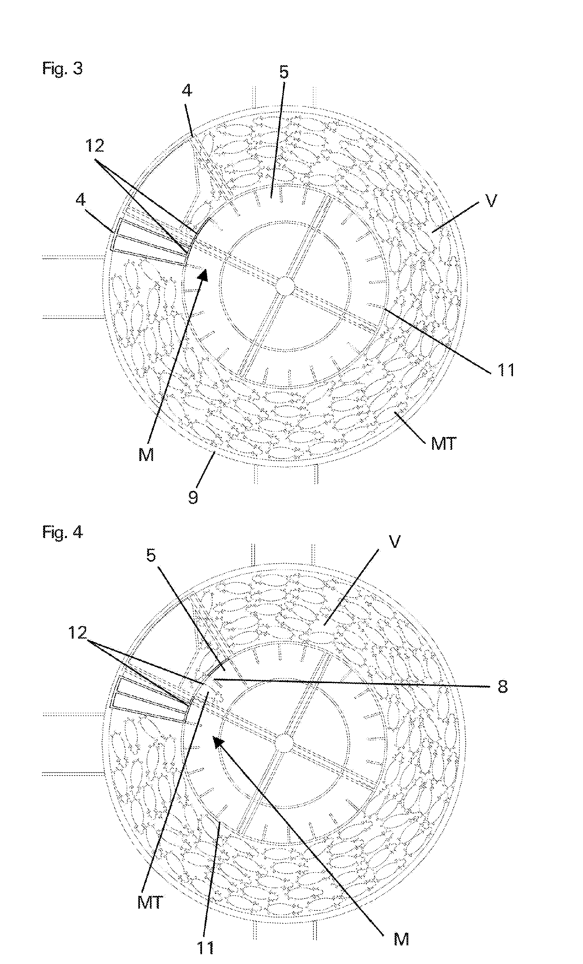

Fig. 3 zeigt den mit zu melkenden Tieren MT gefüllten Vorwartebereich V. Bisher haben sich die Treibevorrichtungen 4 nicht aus deren Ausgangsposition bewegt. Das erste zu melkende Tier MT, welches in die Treibevorrichtung 4 geleitet wurde ist nun bereit durch den Ein- und Auslass 12 in den Melkbereich M überzutreten, sobald der Ein- und Auslass 12 geöffnet wird. Dieses zeigt dann Fig. 4, wo das erste einzelne zu melkende Tier MT in den Melkbereich M durch den Ein- und Auslass 12 innerhalb der Begrenzung 11 zwischen Melkbereich M und Wartebereich VN übertritt.

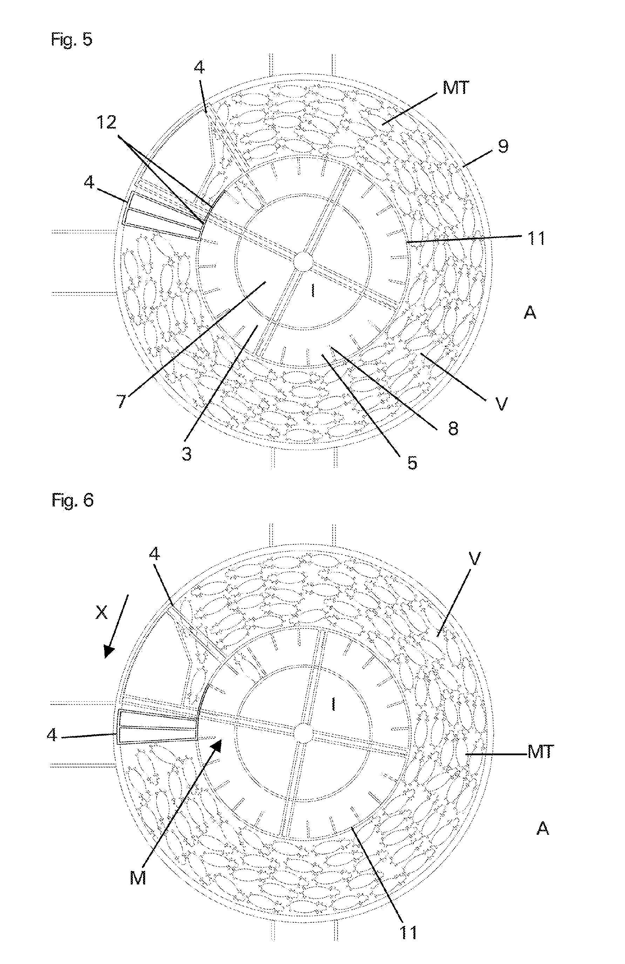

Nachdem das zu melkende Tier MT vorwärts den Melkbereich M über einen Melkplatz 5 betreten hat, läuft es um die Trennvorrichtungen 8 herum und steht danach rückwärtsgerichtet, wie in Fig. 5 dargestellt, zur Melkergrube 7 in dem vorgesehenen Melkplatz 5. Ebenso wird der Ein- und Auslass 12 wieder verschlossen. Die zweite Trennvorrichtung 8, die den Melkplatz, in dem das zu melkende Tier MT steht, auf der anderen Seite begrenzt, wurde beim Betreten des Melkbereichs M geschlossen (siehe Fig. 4 bis 7), um ein unkontrolliertes Weiterlaufen des zu melkenden Tiers MT zu verhindern.

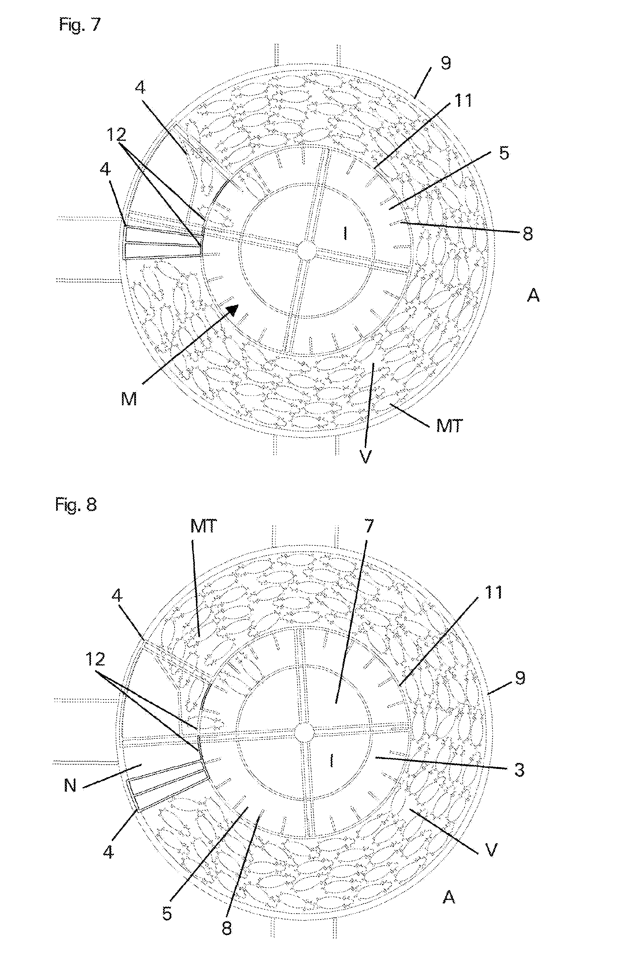

In Fig. 6 wird das erste mal die Treibevorrichtung 4 und entsprechend der Ein-und Auslass 12 weiterbewegt, damit das nächste zu melkende Tier MT den nächsten freien Melkplatz 5 betreten kann. Das Betreten, wie in Fig. 7 dargestellt, erfolgt in Analogie zu dem oben beschriebenen Verfahren. Hinsichtlich der Trennvorrichtungen 8 müssen diese nun nicht mehr geschlossen sein, da im zum zu füllenden benachbarten Melkplatz bereits ein zu melkendes Tier MT steht und den weiteren Weg versperrt.

In Fig. 8 hat sich der Ein- und Auslass 12 und die Treibevorrichtungen 4 weiter bewegt. Hierbei ist zu beachten, dass die zwei hier dargestellten Treibevorrichtungen 4 sich unterschiedlich weit bewegt haben, wodurch der Nachwartebereich N jetzt vergrößert wurde und der Vorwartebereich V dementsprechend verkleinert wurde. Diese unterschiedliche Bewegung der zwei Trennvorrichtungen 4 ist nötig, um die zu melkenden Tiere MT weiter in den Melkbereich zu treiben, da durch das Übertreten von zu melkenden Tieren MT die Anzahl der zu melkenden Tiere MT im Vorwartebereich sinkt, wodurch dieser um eine Treibung zu erzielen entsprechend verkleinert werden muss.

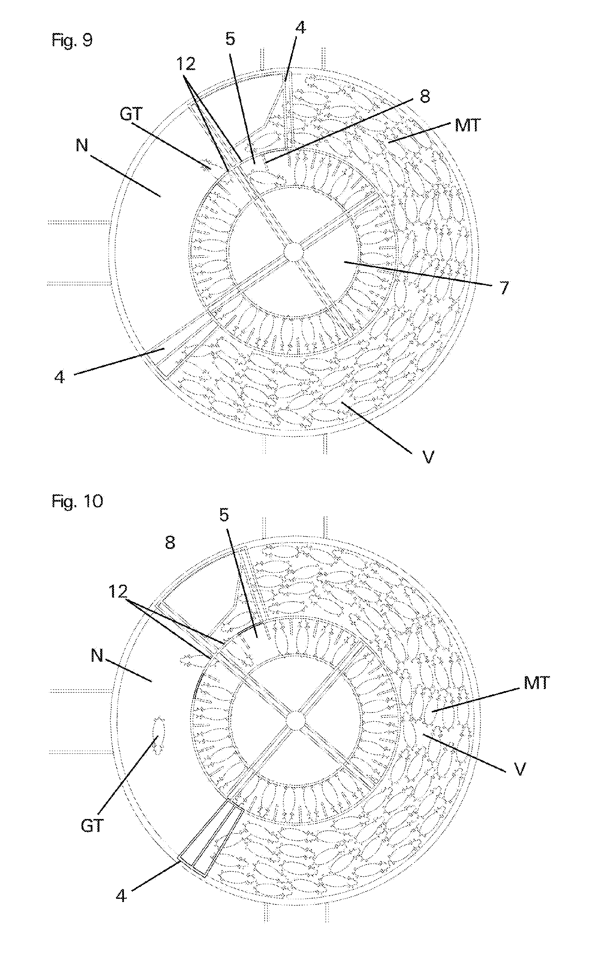

In Fig. 9 sind alle Melkplätze 5 belegt, wobei gerade das erste gemolkene Tier GT den Melkbereich M durch den Ein- und Auslass 12 hin in den Nachwartebreich N verlässt. Leere oder auch freigewordenen Melkplätze 5 werden wieder mit zu melkenden Tieren MT gefüllt.

In Fig. 10 kommt das zweite gemolkene Tier GT aus dem Melkbereich M in den Nachwartebereich N und der zuvor frei gewordene Melkplatz 5 wird durch ein zu melkendes Tier MT wieder belegt. Die Treibevorrichtungen bewegen sich entsprechend weiter, was eine weitere Reduzierung des Vorwartebereichs V und somit eine entsprechende Vergrößerung des Nachwartebereichs N mit sich bringt.

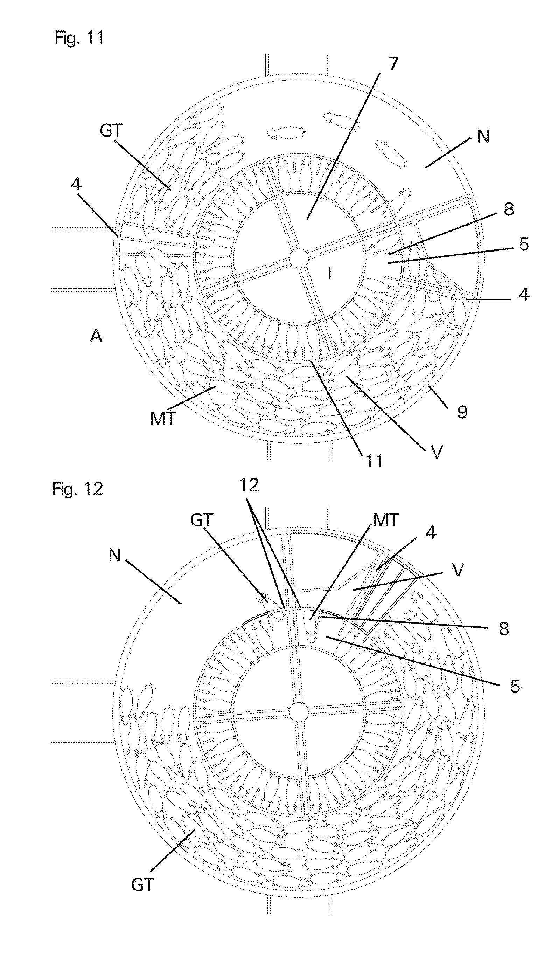

Immer mehr gemolkene Tiere GT verlassen, wie in Fig. 11 dargestellt den Melkbereich M, wodurch sich der Nachwartebereich N immer mehr füllt.

In Fig. 12 betritt das letzte zu melkende Tier aus dem Vorwartebereich V den Melkbereich M, wobei der Vorwartebereich V nunmehr durch die immer weiter nachgestellten Treibevorrichtungen 4 auf ein Minimum reduziert wurde.

Da die ersten gemolkenen Tiere GT fertig sind, können diese gemolkenen Tiere GT nach Einstellen der Treibevorrichtungen 4 den Nachwartebereich N des Melkstands 1 durch den Durchgang 10 in der Einfriedung 9 verlassen (Fig. 13). Gleichzeitig wird durch die Treibevorrichtung 4 ein Austreiben der gemolkenen Tiere GT sicher gestellt.

Fig. 14 zeigt, wie das letzte gemolkene Tier GT den Melkbereich M verlässt, woraufhin die Treibevorrichtung 4 die letzten gemolkenen Tiere GT aus dem Nachwartebereich N aus dem Melkstand 1 heraustreiben. Um nach dem vollständigen Austreiben der gemolkenen Tiere GT aus dem Nachwartebereich N den Melkstand 1 wieder zur Aufnahme von zu melkenden Tieren MT vorzubereiten, müssen die Treibevorrichtungen 4 wieder in Ihre Ausgangsposition, wie in Fig. 1 dargestellt bewegt werden. Dieses Zurückstellen wird durch ein kurzes synchrones Zurückfahren beider Treibevorrichtungen 4 entgegen der Richtung X vollzogen. Die Strecke des Zurückfahrens der Treibevorrichtungen 4 entspricht in etwa der Breite der Durchführung 10 in der Einfriedung 9 des Melkstands 1. Nach dem Zurückfahren der Treibevorrichtungen 4 können neue zu melkende Tiere MT durch die Durchführung 10 in den Melkstand 1 eingebracht werden.

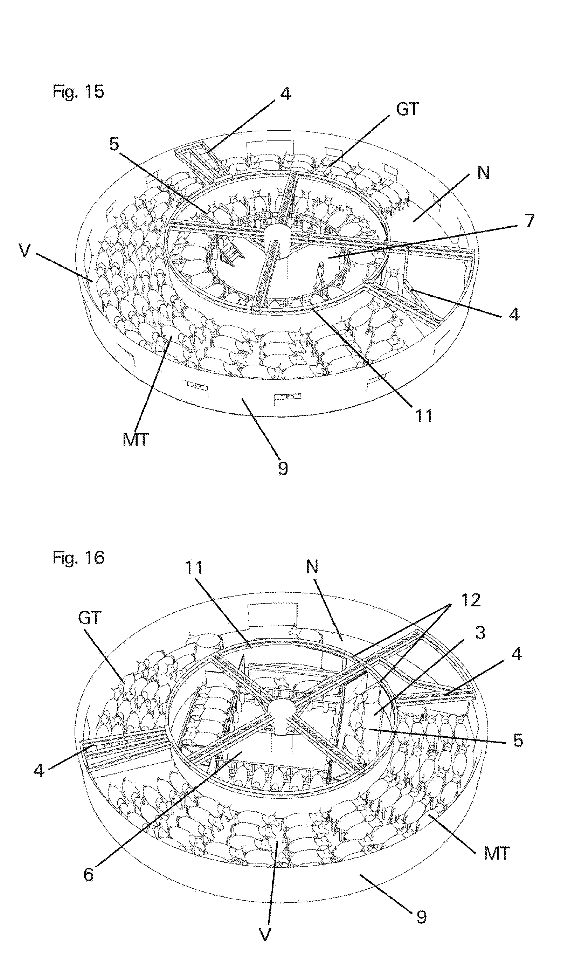

In Fig. 15 ist der zuvor beschriebene Melkstand 1 in einer dreidimensionalen Darstellung abgebildet. Hier lassen sich nochmals die in diesem ersten Ausführungsbeispiel verwendeten Treibevorrichtungen 4 im Detail betrachten.

Ebenso wird der Melkbereich M, in dem sich die Melkergrube 7 mit dem Melker befindet, näher verdeutlicht.

Fig. 16 zeigt eine dreidimensionale Darstellung eines zweiten Ausführungsbeispiels eines Melkstands 1, wobei hier bei gleichen Gegenstandsmerkmalen oben eingeführte Bezugszeichen verwendet werden. Unterschiedlich zum ersten Ausführungsbeispiel ist der Melkbereich M des Melkstands 1. Hier sind die einzelnen Melkplätze 5 in Gruppen zu je sechs Melkplätzen 5 zusammengefasst angeordnet. Hierbei werden 6 zu melkende Tiere MT gleichzeitig in den Gruppen-Melkplatz 5 eingetrieben und dort entsprechend vom Melker bedient. Der Austrieb erfolgt dann wie hier dargestellt durch einen Ein- und Auslass 12 oder aber über einen Schnellaustrieb nach vorne, welcher hier nicht weiter dargestellt ist.

Im dargestellten Ausführungsbeispiel dreht der Ein- und Auslass 12 mit der Begrenzung 11, so dass nur ein Ein- und Auslass 12 erforderlich ist. Alternativ kann auch für jede Melkplatzgruppe ein fester Einlass und ein fester Auslass in einer dann ortsfest angeordneten Begrenzung vorgesehen sein. Der Auslass kann dann auch als Schnellaustrieb ausgebildet sein, wobei dabei die Begrenzung 11 über die gesamte Breite der Melkplatzgruppe öffenbar ist.

Der Wartebereich VN ist in diesem Ausführungsbeispiel rund ausgebildet, es ist jedoch auch möglich die quadratische Form des Melkbereichs M nach außen zu übertragen und den Wartebereich VN entsprechend parallel beabstandet zum Melkbereich M ebenfalls mit einem quadratischen Grundriß auszugestalten.

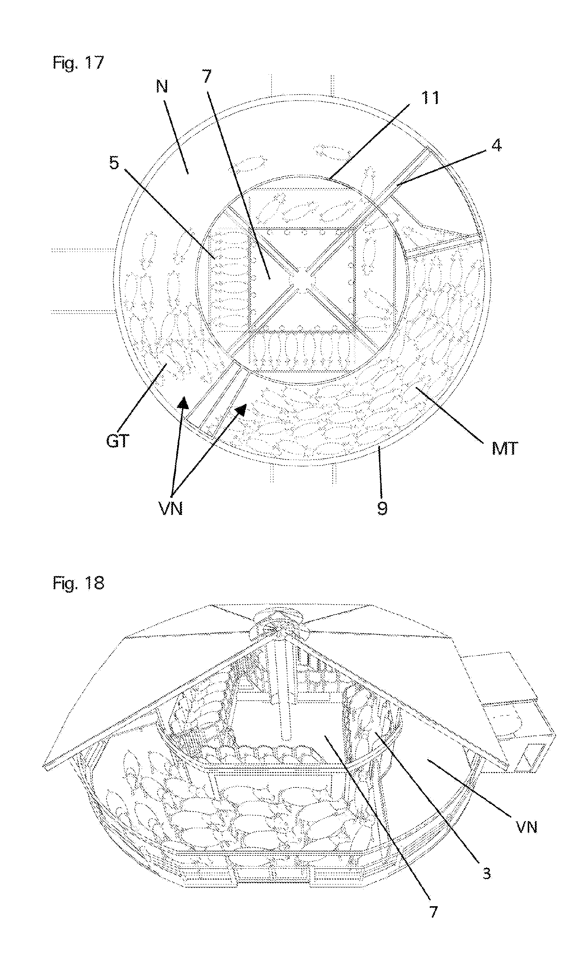

In Fig. 17 ist das in Fig. 16 dreidimensional dargestellte Ausführungsbeispiel nochmals in Draufsicht dargestellt, um nochmals die Anordnung der Gruppen-Melkplätze 5 genauer aufzuzeigen. In dem in Fig. 17 rechts dargestellten Gruppen-Melkplatz 5 werden gerade 6 zu melkende Tiere MT eingetrieben, wobei gleichzeitig im in Fig. 17 oben dargestellten Gruppen-Melkplatz 5 gemolkene Tiere GT ausgetrieben werden.

Fig. 18 zeigt eine dreidimensionale Darstellung eines dritten Ausführungsbeispiels eines Melkstands. Hierbei werden bei gleichen Gegenstandsmerkmalen die gleichen oben eingeführten Bezugszeichen verwendet. Unterschiedlich zu den ersten beiden Ausführungsbeispielen ist der Wartebereich VN des Melkstandes 1, der hier durch eine Gebäudewand von der Melkergrube 7 und den Standflächen 3 getrennt ist. Während der Wartebereich VN in den ersten beiden Ausführungsbeispielen rund ausgeführt ist, ist der Wartebereich VN hier im Wesentlichen viereckig ausgeführt.

### Bezugszeichenliste

- 1: Melkstand
- 2: Boden
- 3: Standfläche
- 4: Treibevorrichtung
- 5: Melkplatz
- 6: Arbeitsfläche
- 7: Melkergrube
- 8: Trennvorrichtung
- 9: Einfriedung
- 10: Durchgang
- 11: Begrenzung
- 12: Ein- und Auslass
- A: Außenseite
- I: Innenseite
- M: Melkbereich
- N: Nachwartebereich
- V: Vorwartebereich
- VN: Wartebereich
- X: Richtung
- Z: zentraler Punkt
- GT: gemolkenes Tier
- MT: zu melkendes Tier

## Patentansprüche

1. Melkstand (1) mit einem Boden (2), einem Vorwartebereich (V) zur Aufnahme von zu melkenden Tieren (MT), einem Nachwartebereich (N) zur Aufnahme von gemolkenen Tieren (GT) und einem Melkbereich (M) mit einer Standfläche (3), wobei der Melkbereich (M) von dem Vorwartebereich (V) und dem Nachwartebereich (N) umlaufend umschlossen ist und Treibevorrichtungen (4) innerhalb des Wartebereichs (VN) vorgesehen sind, **dadurch gekennzeichnet, dass** die Grundfläche des Vorwartebereichs (V) und die Grundfläche des Nachwartebereichs (N) des Melkstands (1) variabel und relativ zueinander verstellbar sind und dass die Treibevorrichtungen (4) den Vor- (V) und Nachwartebereich (N) voneinander trennen.

2. Melkstand (1) nach Anspruch 1, **dadurch gekennzeichnet, dass** die Grundfläche des Vorwartebereichs (V) und die Grundfläche des Nachwartebereichs (N) des Melkstands (1) auf einer gemeinsamen Grundfläche des Wartebereichs (VN) angeordnet sind.

3. Melkstand (1) nach Anspruch 1 oder 2, **dadurch gekennzeichnet, dass** die Summe der Grundflächen des Vorwartebereichs (V) und des Nachwartebereichs (N) konstant bleibt.

4. Melkstand (1) nach Anspruch 1, 2 oder 3, **dadurch gekennzeichnet, dass** zwei um den Melkbereich (M) umlaufend verstellbare Treibevorrichtungen (4) vorgesehen sind, die vorzugsweise sich durchlaufend ausgebildet sind.

5. Melkstand (1) nach einem der vorangehenden Ansprüche, **dadurch gekennzeichnet, dass** im Melkbereich (M) Melkplätze (5) zur Aufnahme von zu melkenden Tieren (MT) vorhanden sind, die gleichbeabstandet oder in Gruppen, vorzugsweise von 4 bis 8 Melkplätzen (5) je Gruppe, um eine im Melkbereich (M) vorgesehene Arbeitsfläche (6) für einen oder mehrere Melker, vorzugsweise eine Melkergrube (7), angeordnet sind, wobei bei Anordnung in n gleichbeabstandeten Einzel-Melkplätzen (5) vorzugsweise eine runde Form zur Anordnung der Einzel-Melkplätze (5) innerhalb des Melkbereichs (M) um eine Arbeitsfläche (6) vorgesehen ist und bei Anordnung der Melkplätze (5) in n Gruppen, die Gruppen in Form eines n-Ecks, vorzugsweise 3, 4 oder 5 Gruppen, entsprechend in Drei-, Vier- oder Fünfeckform vorgesehen sind, wobei die einzelnen Melkplätze (5) bevorzugt durch Trennvorrichtungen (8) voneinander getrennt sind.

6. Melkstand (1) nach einem der vorangehenden Ansprüche, **dadurch gekennzeichnet, dass** der Melkstand (1) von einer Einfriedung (9), vorzugsweise einer Gebäudeaußenwand, umschlossen ist, wobei die Einfriedung (9) kreisrund, oval oder mehreckig, insbesondere rechteckig oder quadratisch, jeweils mit spitzen oder abgerundeteten Außenecken ausgebildet ist.

7. Melkstand (1) nach Anspruch 6, **dadurch gekennzeichnet, dass** der Vorwartebereich (V) und der Nachwartebereich (N) auf seinen Außenseiten (A) von der Einfriedung (9) des Melkstands (1) begrenzt ist und auf seinen Innenseiten (I) durch eine Begrenzung (7), insbesondere einem Gitter, einer Wand oder einem Vorhang vom Melkbereich (M) getrennt ist.

8. Melkstand (1) nach Anspruch 7, **dadurch gekennzeichnet, dass** der umlaufende Wartebereich (VN) eine zur Einfriedung (9) parallele Begrenzung (11) auf der Innenseite (I) aufweist.

9. Melkstand nach Anspruch 7 oder 8, **dadurch gekennzeichnet, dass** ein Ein- und Auslass (12) in der Begrenzung (11) auf der Innenseite (I) des Wartebereichs (VN) vorgesehen ist.

10. Melkstand nach Anspruch 9, **dadurch gekennzeichnet, dass** die Begrenzung (11) auf der Innenseite (I) des Wartebereichs (VN) um einen zentralen Melkbereich (M) drehbar ausgebildet ist.

11. Arbeitsverfahren für einen Melkstand (1) mit einem Wartebereich (VN), bestehend aus einem Vorwartebereich (V) und einem Nachwartebereich (N), und einem Melkbereich (M) mit Melkplätzen (P), insbesondere nach einem der Ansprüche 1 bis 13, mit den Schritten:
- Einbringen der zu melkenden Tiere (MT) in den Vorwartebereich (V) des leeren Melkstands (1), wobei die gesamte Grundfläche des Wartebereichs (VN) den Vorwartebereich (V) bildet und der Nachwartebereich (N) keine Grundfläche oder nur eine verhältnismäßig kleine Grundfläche von 0 bis 10% der gesamten Grundfläche des Wartebereichs (VN) einnimmt,
- Überleiten ein oder mehrerer zu melkenden Tiere (MT) aus dem Vorwartebereich (V) an einen Einzel- oder Gruppen-Melkplatz (5) in den Melkbereich (M), wobei sich während des oder nach dem Überleitungsvorgang die Grundfläche des Vorwartebereichs (V) reduziert und entsprechend der Grundflächenreduzierung des Vorwartebereichs (V) die Grundfläche des Nachwartebereichs (N) vergrößert,
- Abmelken des/der im Melkbereich (M) befindlichen zu melkenden Tiere(s) (MT),
- Weiteres Überleiten von einzelnen oder mehreren zu melkenden Tieren (MT) aus dem Vorwartebereich (V) in leere Melkplätze (5) im Melkbereich (M), solange bis alle Melkplätze (5) im Melkbereich (M) befüllt sind, wobei die Grundfläche des Vorwartebereichs (V) fortlaufend oder abschnittsweise reduziert und damit einhergehend der Nachwartebereich (N) entsprechend der Grundflächenreduzierung des Vorwartebereichs (V) vergrößert wird,
- Überleiten gemolkener Tiere (GT) aus dem Melkbereich (M) in den Nachwartebereich (N), Sammeln der gemolkenen Tiere (GT) im Nachwartebereich (N) und bedarfsweises Wiederbefüllen von freigewordenen Melkplätzen (5) mit zu melkenden Tieren (MT) aus dem Vorwartebereich (V) und anschließendem Melken, bis sich keine zu melkenden Kühe (MT) im Vorwartebereich (V) befinden,
- Sammeln gemolkener Tiere (GT) im Nachwartebereich (N) und Ausbringen aus dem Nachwartebereich (N) des Melkstandes (1).

12. Arbeitsverfahren nach Anspruch 11, **dadurch gekennzeichnet, dass** die zu melkenden Tiere (MT) nach dem Überleiten aus dem Vorwartebereich (V) im Melkbereich (M) ausgerichtet werden.

13. Arbeitsverfahren nach Anspruch 11 oder 12, **dadurch gekennzeichnet, dass** gemolkene Tiere (GT) aus dem Nachwartebereich (N) bereits ausgebracht werden, wenn sich noch zu melkende Tiere (MT) oder bereits gemolkene Tiere (GT) im Melkbereich (M) und/oder Vorwartebereich (V) befinden.

14. Arbeitsverfahren nach Anspruch 13, **dadurch gekennzeichnet, dass** nach einem Zwischenausbringen der gemolkenen Tiere (GT) aus dem Nachwartebereich (N) die Grundfläche des Nachwartebereichs (N) verkleinert und entsprechend die Grundfläche des Vorwartebereichs (V) vergrößert wird und weitere zu melkende Tiere (MT) in den Vorwartebereich (V) eingebracht werden.

15. Arbeitsverfahren nach einem der Ansprüche 11 bis 14, **dadurch gekennzeichnet, dass** die zu melkenden Tiere (MT) und/oder die gemolkenen Tiere (GT) vor bzw. nach dem Abmelken sich fortlaufend im Wartebereich (VN) des Melkstands (1) in die selbe Richtung (X) bewegen.
